# EUROPEAN PATENT APPLICATION

(11) **EP 4 502 777 A1**
(43) Date of publication of application: **05.02.2025**
(21) Application number: 23773646.7
(22) Date of filing: 13.03.2023
(51) Int. Cl.: G06F 3/0488

(54) **MAP DISPLAY METHOD, APPARATUS, STORAGE MEDIUM AND ELECTRONIC APPARATUS**

(30) Priority: 25.03.2022 CN 202210303265
(71) Applicant: Dreame Innovation Technology (Suzhou) Co., Ltd., Suzhou, Jiangsu 215104 (CN)
(72) Inventor: ZOU, Yong, Suzhou, Jiangsu 215104 (CN); CHANG, Yu, Suzhou, Jiangsu 215104 (CN); QI, Yi, Suzhou, Jiangsu 215104 (CN)
(74) Representative: ZBM Patents - Zea, Barlocci & Markvardsen
(86) International application number: PCT/CN2023/081069
(87) International publication number: WO 2023/179398

(57) **Abstract**

Embodiments of the present disclosure provide map display method, apparatus, a storage medium, and an electronic apparatus. The method includes determining a touch coordinate of a touch point of a touch action on a target map in a case that the touch action on the target map displayed on a touch display screen is detected; determining a rectangular area centered on the touch coordinate according to the touch coordinate, a first preset length, and a second preset length; and displaying an image included in the rectangular area in a target display area on the display screen. According to the present disclosure, a problem of low accuracy of map editing of a cleaning device in related technologies is resolved, thereby achieving the effect of improving accuracy of map editing of the cleaning device.

## Description

The present disclosure claims priority to Chinese Patent Application No. 202210303265.3, filed with the Chinese Patent Office on March 25, 2022, and entitled "MAP DISPLAY METHOD, APPARATUS, STORAGE MEDIUM AND ELECTRONIC APPARATUS", which is incorporated herein by reference in its entirety.

### TECHNICAL FIELD

Embodiments of the present disclosure relate to the communication field, and in particular, to map display method, apparatus, storage medium, and electronic apparatus.

### BACKGROUND

With the development of science and technology, smart cleaning home devices are getting increasingly popular and have gradually entered more families. In the field of smart cleaning devices, a map of an area to be cleaned by a cleaning device can be edited in a smart control software, for example, a virtual wall or a restricted area in the map for sweeping and mopping can be edited.

In the prior art, when editing the virtual wall or the restricted area for sweeping and mopping, a position and size of the virtual wall or the restricted area in the map for sweeping and mopping can be modified via a touch screen. However, map information at a position touched by a user's finger may be covered, so that the effect of map editing cannot be accurately seen and controlled when the map is edited.

To resolve the problem of low accuracy in map editing of the cleaning device in related technologies, no effective solution has been put forward at present.

### SUMMARY

Embodiments of the present disclosure provide map display method, apparatus, storage medium, and electronic apparatus, to at least resolve the problem of low accuracy in map editing of a cleaning device in related technologies.

According to an embodiment of the present disclosure, a map display method is provided, including determining a touch coordinate of a touch point of a touch action on a target map in a case that the touch action on the target map displayed on a touch display screen is detected; determining a rectangular area centered on the touch coordinate according to the touch coordinate, a first preset length, and a second preset length, where the first preset length is a preset length of the rectangular area, and the second preset length is a preset height of the rectangular area; and displaying an image included in the rectangular area in a target display area on the display screen.

In an exemplary embodiment, before the displaying an image included in the rectangular area in a target display area on the display screen, the method may include determining a coordinate of a first pixel point included in the rectangular area; and determining the image included in the rectangular area according to the coordinate of the first pixel point, the first preset length, and the second preset length.

In an exemplary embodiment, before the determining the image included in the rectangular area according to the coordinate of the first pixel point, a value of the first preset length, and a value of the second preset length, the method may further include saving an image presently displayed on the touch display screen in a first view; creating a first bitmap according to a length value and a height value of the first view; and saving pixel information of the first view into the first bitmap; and the determining the image included in the rectangular area according to the coordinate of the first pixel point, the first preset length, and the second preset length may include cropping the first bitmap according to the coordinate of the first pixel point, the first preset length, and the second preset length, to obtain the image included in the rectangular area.

In an exemplary embodiment, the saving pixel information of the first view into the first bitmap may include generating a canvas through the first bitmap; and drawing image information in the first view into the first bitmap through the canvas.

In an exemplary embodiment, the determining the image included in the rectangular area according to the coordinate of the first pixel point, the first preset length, and the second preset length may include determining a second view according to the coordinate of the first pixel point, the first preset length, and the second preset length; creating context information of a second bitmap through the second view, where a size of the second view is the same as an image size of the second bitmap; and converting the context information of the second bitmap into the image included in the rectangular area.

In an exemplary embodiment, before the converting the context information of the second bitmap into the image included in the rectangular area, the method may further include obtaining image information of the second view; and outputting the image information of the second view to the context information of the second bitmap.

In an exemplary embodiment, the displaying an image included in the rectangular area in a target display area on the display screen may include enlarging the image included in the rectangular area according to a first ratio and displaying an enlarged image in the target display area, or reducing the image included in the rectangular area according to a second ratio and displaying a reduced image in the target display area.

According to another embodiment of the present disclosure, a map display apparatus is provided, including an obtaining module, configured to determine a touch coordinate of a touch point of a touch action on a target map in a case that the touch action on the target map displayed on a touch display screen is detected; a determining module, configured to determine a rectangular area centered on the touch coordinate according to the touch coordinate, a first preset length, and a second preset length, wherein the first preset length is a preset length of the rectangular area, and the second preset length is a preset height of the rectangular area; and a display module, configured to display an image included in the rectangular area in a target display area on the display screen.

According to another embodiment of the present disclosure, a computer-readable storage medium is further provided, wherein the computer-readable storage medium may store a computer program, and when the computer program is executed by a processor, the steps of the method according to any one of the above may be implemented.

According to another embodiment of the present disclosure, an electronic apparatus is further provided, which may include a memory and a processor. A computer program is stored in the memory, and the processor is configured to run the computer program to perform the steps in any of the above method embodiments.

According to the present disclosure, the touch coordinate of the touch point of the touch action on the target map may be determined in a case that the touch action on the target map displayed on the touch display screen is detected. According to the touch coordinate and the preset length and height of the rectangular area, the rectangular area centered on the touch coordinate may be determined, and the image included in the rectangular area may be displayed in the target display area on the display screen. Image information in the rectangular area with the touch coordinate of the touch point as the center, the first preset length as the length, and the second preset length as the height is obtained, so that the map image information near a position touched by a user can be displayed in a specific target area on the screen, thereby resolving a problem that the map information at the position touched by the user's finger is covered. According to the present disclosure, the problem that the effect of map editing cannot be accurately seen and controlled when a map of the cleaning device is edited can be resolved, thereby achieving the effect of improving the accuracy of map editing of the cleaning device.

### BRIEF DESCRIPTION OF DRAWINGS

The accompanying drawings described herein are used to provide further understanding of the present disclosure and constitute a part of the present disclosure. The illustrative embodiments of the present disclosure and descriptions thereof are used to explain the present disclosure, and do not constitute an undue limitation to the present disclosure. In the drawings:
FIG. 1 is a block diagram of a hardware structure of a mobile terminal for a map display method according to an embodiment of the present disclosure;
FIG. 2 is a flow chart of a map display method according to an embodiment of the present disclosure; and
FIG. 3 is a structural block diagram of a map display method apparatus according to an embodiment of the present disclosure.

### DETAILED DESCRIPTION

The present disclosure is described in detail in the following with reference to the accompanying drawings and in combination with embodiments. It should be noted that, without conflict, embodiments in the present disclosure and the features in embodiments may be mutually combined.

It should be noted that, in the specification, claims, and the accompanying drawings of the present disclosure, the terms "first", "second", and the like are intended to distinguish similar objects but do not necessarily indicate a specific order or sequence.

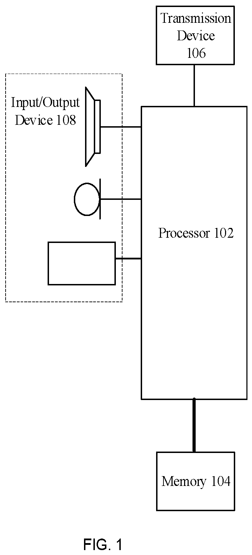

A method embodiment provided in an embodiment of the present disclosure may be performed in a mobile robot or a similar computing apparatus. Taking the method embodiment performed in the mobile robot as an example, FIG. 1 is a block diagram of a hardware structure of a control method for rotation of a side brush according to an embodiment of the present disclosure. As shown in FIG. 1, the mobile robot may include one or more (only one is shown in FIG. 1) processors 102 (the processor 102 may include but is not limited to a processing apparatus such as a microprocessor MCU or a programmable logic device FPGA), and a memory 104 for storing data. In an exemplary embodiment, the mobile robot may further include a transmission device 106 configured for a communication function and an input/output device 108. A person skilled in the art can understand that the structure shown in FIG. 1 is only illustrative and does not limit a structure of the mobile robot. For example, the mobile robot may further include more or fewer components than the mobile robot shown in FIG. 1 or have a different configuration with equivalent functions or more functions than the mobile robot shown in FIG. 1.

The memory 104 may be configured to store a computer program, for example, a software program and a module of application software, such as a computer program corresponding to a cleaning control method in an embodiment of the present disclosure. The processor 102 may perform various function applications and data processing, that is, it may implement the above-mentioned method, by running the computer program stored in the memory 104. The memory 104 may include a high-speed random access memory, and may further include a non-volatile memory, such as one or more magnetic storage apparatuses, a flash memory, or other non-volatile solid-state memories. In some embodiments, the memory 104 may further include a memory disposed remotely relative to the processor 102, and the remote memory may be connected to the mobile robot via a network. An example of the network may include but is not limited to the Internet, an intranet, a local area network, a mobile communication network, or a combination thereof.

The transmission device 106 may be configured to receive or send data via the network. A specific example of the network may include a wireless network provided by a communication provider of the mobile robot. In an embodiment, the transmission device 106 may include a Network Interface Controller (NIC), which may be connected to another network device through a base station to communicate with the Internet. In an embodiment, the transmission device 106 may be a radio frequency (RF) module, which may be configured to communicate with the Internet via a wireless manner.

Firstly, an application scenario of the present disclosure is described:

During operation, a cleaning device may perform a cleaning operation based on a pre-established area map, wherein the area map of the cleaning device can be edited by editing and modifying a position or size of a virtual wall or a restricted area for sweeping and mopping. However, map information at a position touched by a user's finger may be covered, so that the effect of map editing cannot be accurately seen and controlled when editing the map of the cleaning device. To solve this problem, an embodiment of the present disclosure proposes a map display method, in which the effect of editing the map in a target area of a screen can be accurately seen and controlled when the area map is edited, thereby preventing the user's finger covering the map information and causing the image information of the position covered by the user's finger cannot be seen. The cleaning device in the embodiment of the present disclosure may be a sweeping robot or another device with a sweeping capability and an automatic driving capability.

The present disclosure is described below with reference to an embodiment.

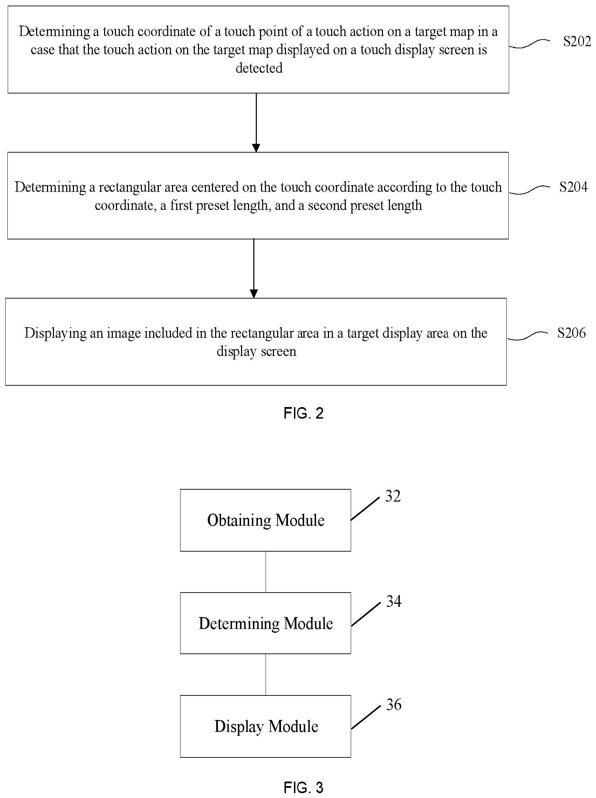

In this embodiment, a map display method is provided. As shown in FIG. 2, the method includes the following steps.

Step S202: in a case that a touch action on a target map displayed on a touch display screen is detected, determining a touch coordinate of the touch point of the touch action on the target map.

The display screen may be a touch display screen of a mobile phone device or a tablet device. A device in which the touch display screen is located is not limited. The target map may be a cleaning area map or a navigation map created in a cleaning device. A type of the target map is not limited. The touch action may be a tapping operation, a dragging operation, or the like. The touch coordinate may be a coordinate corresponding to the touch point in the display screen, such as (x, y).

Step S204: determining a rectangular area centered on the touch coordinate according to the touch coordinate, a first preset length, and a second preset length. The first preset length may be a preset length of the rectangular area, and the second preset length may be a preset height of the rectangular area.

The touch coordinate may be (30, 40), the first preset length may be 30, and the second preset length may be 20. A rectangular area may be determined with the touch coordinate (30,40) as a center, the first preset length of 30 as a length, and the second preset length of 20 as a height.

Step S206: displaying an image included in the rectangular area in a target display area on the display screen.

The target display area may be above or below the touch coordinate, in an upper left corner or a lower right corner of the display screen, or the like. A position of the target display area is not limited herein. The image included in the rectangular area may be displayed in the target area.

The above-mentioned operations may be performed by the cleaning device (e.g., a smart robot, or another device with a cleaning capability and an automatic driving capability), a processor disposed in the cleaning device, or another device with similar processing capabilities.

Optionally, in an exemplary embodiment, the above-mentioned steps may be performed by a background processor, another device with similar processing capabilities, or a machine at least integrated with a data processing device. The data processing device may include a terminal such as a computer or a mobile phone, which are not limited thereto.

Through the above steps, in the case that the touch action on the target map displayed on the touch display screen is detected, the touch coordinate of the touch point of the touch action on the target map may be determined. According to the touch coordinate and the preset length and height of the rectangular area, the rectangular area centered on the touch coordinate can be determined, and the image included in the rectangular area may be displayed in the target display area on the display screen. Image information in the rectangular area with the touch coordinate of the touch point as the center, the first preset length as the length, and the second preset length as the height may be obtained, map image information near the position touched by the user can be displayed in a specific target area on the screen, thereby resolving a problem that the map information at the position touched by the user's finger is covered. According to the present disclosure, a problem that the effect of map editing cannot be accurately seen and controlled when the map of the cleaning device is edited can be resolved, and the effect of improving the accuracy of map editing in the cleaning device can be achieved.

In an exemplary embodiment, before the displaying the image included in the rectangular area in the target display area on the display screen, the method may include determining a coordinate of a first pixel point included in the rectangular area; and determining the image included in the rectangular area according to the coordinate of the first pixel point, the first preset length, and the second preset length.

As an alternative implementation, assuming that the display screen is a display screen of a mobile phone, and the rectangular area is a rectangular area determined with a touch coordinate (30, 40) as the center, a first preset length of 30 as the length, and a second preset length of 20 as the height. Before the image included in the rectangular area in the target display area on the display screen is displayed, the coordinate of the first pixel point included in the rectangular area may need to be determined. The coordinate of the first pixel point may be a coordinate of any pixel point in the rectangular area, such as a coordinate of a pixel in an upper left corner of the rectangular area or a coordinate of a pixel in an upper right corner of the rectangular area, and the coordinate of the first pixel point may be determined according to an actual situation. Assuming that the first pixel point is the coordinate of the pixel point in the upper left corner of the rectangular area, and the coordinate of the first pixel point are (15,30), the image included in the rectangular area may be determined according to the coordinate of the first pixel point (15,30), the first preset length of 30, and the second preset length of 20.

In an exemplary embodiment, before the determining the image included in the rectangular area according to the coordinate of the first pixel point, a value of the first preset length, and a value of the second preset length, the method may further include saving an image presently displayed on the touch display screen in a first view; creating a first bitmap according to a length value and a height value of the first view; and saving pixel information of the first view into the first bitmap. The determining the image included in the rectangular area according to the coordinate of the first pixel point, the first preset length, and the second preset length may include cropping the first bitmap according to the coordinate of the first pixel point, the first preset length, and the second preset length to obtain the image included in the rectangular area.

As an alternative implementation, assuming that the display screen is a display screen on a mobile phone, and the first pixel point is a coordinate of a pixel point in an upper left corner of the rectangular area and assuming that the coordinate of the first pixel point is (15,30), the first preset length is 30, and the second preset length is 20, and an image presently displayed on the display screen of the mobile phone may be saved in a first view. Assumed in an Android system, the image presently displayed on the display screen of the mobile phone may be obtained through View view=Activity.getWindow().getDecorView().getRootView() and may be saved in the first view, and a first bitmap may be created according to a length value and a height value of the first view. The first bitmap may be obtained through Bitmap.createBitmap(width, height, Bitmap.Config.ARGB_8888), wherein parameters "width" and "height" represents the first preset length and the second preset length of the rectangular area, respectively, ARGB(Alpha, Red, Green, Blue) represents a color mode of the pixel, and ARGB_8888 represents a 32-bit ARGB bitmap. Assuming that a length value of the first view is 240 and a height value is 320, the first bitmap with the length value of 240 and the height value of 320 may be created, and pixel information of the first view may be saved in the first bitmap. In this case, a coordinate system of the first bitmap may be established, for example, a coordinate system with a horizontal axis length of 240 and a vertical axis length of 320 may be established with the upper left corner as the origin of the coordinate system. According to the coordinate (15,30) of the first pixel point, the first preset length of 30, and the second preset length of 20, the first bitmap may be cropped to obtain the image included in the rectangular area.

In an exemplary embodiment, the saving pixel information of the first view into the first bitmap may include generating a canvas through the first bitmap; and drawing image information in the first view into the first bitmap through the canvas.

As an alternative implementation, assuming that the display screen is a display screen of an Android phone, an image presently displayed on a display screen of the mobile phone may be saved in the first view, and a canvas may be generated by using a first bitmap with a same size as the view. An implementation manner may be as follows: Canvas canvas = new Canvas(bitmap). In addition, through the canvas, image information in the first view may be drawn into the first bitmap. If a current system is the Android system, the implementation manner may be view.draw(canvas).

In an exemplary embodiment, the determining the image included in the rectangular area according to the coordinate of the first pixel point, the first preset length, and the second preset length may include determining a second view according to the coordinate of the first pixel point, the first preset length, and the second preset length; creating context information of a second bitmap through the second view, where a size of the second view may be the same as an image size of the second bitmap; and converting the context information of the second bitmap into the image included in the rectangular area.

As an alternative implementation, assuming that the display screen is a display screen on a mobile phone, and the first pixel point is the coordinate of the pixel point in the upper left corner of the rectangular area, and assuming that the coordinate of the first pixel point is (15,30), the first preset length is 30, and the second preset length is 20, the rectangular area may be determined as a rectangular area with the coordinate (15,30) of the first pixel point as vertex coordinate of an upper left corner, a length of 30, and a height of 20. Assuming that a current system is the IOS, the image information in the rectangular area may be saved in the second view according to the first pixel coordinate point, the length of 30, and the height of 20 of the rectangular area in the display screen of the mobile phone. In addition, according to the length and height of the second view, context information of the second bitmap with the same size as the second view can be created using a method of UlGraphicsBeginimageContext, and the context information of the second bitmap may be converted into the image included in a rectangular area using a method of UIGraphicsGetImageFromCurrentImageContext.

In an exemplary embodiment, before the converting the context information of the second bitmap into the image included in the rectangular area, the method may further include obtaining image information of the second view and outputting the image information of the second view to the context information of the second bitmap.

As an alternative implementation, after the context information of the second bitmap with the same size as the second view is created using the method of UlGraphicsBeginimageContext, the obtained image information of the second view may be output to the context information of the second bitmap. Assuming that the current system is the IOS, a specific implementation may be as follows:
view.layer renderinContext:UIGraphicsGetCurrentContext().

In an exemplary embodiment, the displaying an image included in the rectangular area in a target display area on the display screen may include enlarging the image included in the rectangular area according to a first ratio and displaying an enlarged image in the target display area, or reducing the image included in the rectangular area according to a second ratio and displaying a reduced image in the target display area.

As an alternative implementation, the first ratio may be 5, 10, or 15, and a specific enlarging ratio may be determined according to an actual occasion, and the first ratio used for enlargement is not limited herein. Assuming that the first ratio is 5, after the image included in the rectangular area is obtained, the image included in the rectangular area may be enlarged according to the first ratio of 5, that is, an image enlarged by 5 times may be displayed in the target display area. The second ratio may be 1/5, 1/10, or 1/2, and a specific reducing ratio may be determined based on an actual occasion, and the second ratio used for reducing is not limited herein. Assuming that the second ratio is 1/5, after the image included in the rectangular area is obtained, the image included in the rectangular area may be reduced by 1/5 according to the second ratio, that is, an image reduced by 1/5 may be displayed in the target display area.

As an alternative implementation, steps of the map display method may be as follows.
Step 1: obtaining a touch position (x,y) of a finger on a screen of a mobile phone, and calculating a square rect with the touch position as the center and d as a side length based on the touch position.
Step 2:
   (1) in the Android system,
      View view = Activity.getWindow().getDecorView().getRootView() can be used to obtain a view presently displayed in the mobile phone, and some of codes may be implemented as follows:
      int width = view.getWidth();
      int height = view.getHeight();
      Bitmap bitmap =
         Bitmap.createBitmap(width,height,Bitmap.Config.ARGB_8888);
      Canvas canvas = new Canvas(bitmap);
      view.draw(canvas);
      Bitmap bitmap2 =
         Bitmap.createBitmap(bitmap,rect.left,rect.top, rect.width(), rect.heightQ);
      where, Bitmap2 is the image included in the rectangular area; or
   (2)in the IOS, some of codes may be implemented as follows:
      UlView *view = [[UIView alloc] initWithFrame:CGRectMake(rect.left, rect.top, rect. right-rect.left,rect. bottom. rect.top)];
      UlGraphicsBeginimageContext(view.size);
      [view.layer renderInContext:UIGraphicsGetCurrentContext()];
      Ullmage *image= UIGraphicsGetImageFromCurrentImageContext();
      where, the image is included in the rectangular area to be displayed.
Step 3: displaying the obtained image included in the obtained rectangular area with a side length of n*d above or below a touch point of the finger on the screen.

Based on the descriptions of the foregoing implementations, a person skilled in the art may clearly understand that the method in the above-mentioned embodiments may be implemented by a software and an essential general hardware platform or may be implemented by a hardware only. On some occasions, the former may be a preferred implementation. Based on such understanding, the essential technical solution or the part of the present disclosure contributing to the prior art may be reflected in a form of a software product. The computer software product may be stored in a storage medium (e.g., a ROM, a RAM, a magnetic disk, or an optical disc), and may include a plurality of instructions for instructing a terminal device (which may be a mobile phone, a computer, a server, a network device, or the like) to perform the method described in the embodiments of the present disclosure.

In an embodiment, a map display apparatus is also provided. The apparatus may be configured to implement the above-mentioned embodiments and the preferred implementation, and the described contents are not repeated herein. As used below, the term "module" may be a combination of software and/or hardware that can implement a predetermined function. Although the apparatus described in the following embodiments may be preferably implemented by a software, however, implementation performed by hardware or a combination of software and hardware is also possible and contemplated.

FIG. 3 is a structural block diagram of a map display apparatus according to an embodiment of the present disclosure. As shown in FIG. 3, the apparatus includes:
an obtaining module 32, configured to determine a touch coordinate of a touch point of a touch action on a target map in a case that the touch action on the target map displayed on a touch display screen is detected;
a determining module 34, configured to determine a rectangular area centered on the touch coordinate according to the touch coordinate, a first preset length, and a second preset length, wherein the first preset length is a preset length of the rectangular area, and the second preset length is a preset height of the rectangular area; and
a display module 36, configured to display an image included in the rectangular area in a target display area on the display screen.

In an alternative embodiment, the apparatus may be further configured to, before displaying an image included in the rectangular area in a target display area on the display screen, determine a coordinate of a first pixel point included in the rectangular area; and determine the image included in the rectangular area according to the coordinate of the first pixel point, the first preset length, and the second preset length.

In an alternative embodiment, the apparatus may be further configured to, before determining the image included in the rectangular area according to the coordinate of the first pixel point, the first preset length, and the second preset length, save an image presently displayed on the touch display screen in a first view; create a first bitmap according to a length value and a height value of the first view; and save pixel information of the first view into the first bitmap. The determining the image included in the rectangular area according to the coordinate of the first pixel point, the first preset length, and the second preset length may include cropping the first bitmap according to the coordinate of the first pixel point, the first preset length, and the second preset length to obtain the image included in the rectangular area.

In an alternative embodiment, the apparatus may save the pixel information of the first view into the first bitmap in the following manner: generating a canvas through the first bitmap; and drawing image information in the first view into the first bitmap through the canvas.

In an alternative embodiment, the determining module 34 may determine the image included in the rectangular area according to the coordinate of the first pixel point, the first preset length, and the second preset length in the following manner: determining a second view according to the coordinate of the first pixel point, the first preset length, and the second preset length; creating context information of a second bitmap through the second view, wherein a size of the second view may be the same as an image size of the second bitmap; and converting the context information of the second bitmap into the image included in the rectangular area.

In an alternative embodiment, the apparatus may be further configured to, before converting the context information of the second bitmap into the image included in the rectangular area, obtain image information of the second view; and output the image information of the second view to the context information of the second bitmap.

In an alternative embodiment, the display module 36 may display the image included in the rectangular area in a target display area on the display screen in the following manner: enlarging the image included in the rectangular area according to a first ratio and displaying an enlarged image in the target display area, or reducing the image included in the rectangular area according to a second ratio and displaying a reduced image in the target display area.

In an embodiment, a cleaning device is also provided. The cleaning device may include the map display apparatus described in any one of the above-mentioned embodiments.

It should be noted that the above modules may be implemented by a software or a hardware, and the latter one may be implemented in the following manner, which is not limited thereto, all of the above modules may be located in the same processor, or the above modules may be located in different processors in any combination.

An embodiment of the present disclosure may further provide a computer-readable storage medium. The computer-readable storage medium may store a computer program, and when the computer program is set to run, the steps in any of the above-mentioned method embodiments can be performed.

In an embodiment, the above-mentioned computer-readable storage medium may be configured to store a computer program for performing the following steps.
S1: determining a touch coordinate of a touch point of a touch action on a target map in a case that the touch action on the target map displayed on a touch display screen is detected;
S2: determining a rectangular area centered on the touch coordinate according to the touch coordinate, a first preset length, and a second preset length, wherein the first preset length may be a preset length of the rectangular area, and the second preset length may be a preset height of the rectangular area; and
S3: displaying an image included in the rectangular area in a target display area on the display screen.

In an exemplary embodiment, the computer-readable storage medium may include, but is not limited to a USB flash disk, a read-only memory (ROM), a random access memory (RAM), a mobile hard disk drive, a magnetic disk, an optical disk, or other media that can store a computer program.

An embodiment of the present disclosure further provides an electronic apparatus, including a memory and a processor. A computer program is stored in the memory, and the processor is configured to run the computer program, so that the steps in any of the above-mentioned method embodiments can be performed.

In an exemplary embodiment, the electronic apparatus may further include a transmission device and an input/output device, the transmission device may be connected to the above-mentioned processor, and the input/output device may be connected to the above-mentioned processor.

In an exemplary embodiment, the above-mentioned processor may be disposed to perform the following steps through a computer program.
S1: determining a touch coordinate of a touch point of a touch action on a target map in a case that the touch action on the target map displayed on a touch display screen is detected;
S2: determining a rectangular area centered on the touch coordinate according to the touch coordinate, a first preset length, and a second preset length, wherein the first preset length may be a preset length of the rectangular area, and the second preset length may be a preset height of the rectangular area; and
S3: displaying an image included in the rectangular area in a target display area on the display screen.

Obviously, it should be understood by a person skilled in the art that the above-mentioned modules or steps in the present disclosure can be implemented by a general computing apparatus, which may be concentrated on a single computing apparatus or distributed on a network including a plurality of computing apparatuses, and may be implemented by a program code executable by a computing apparatus, thus the modules or steps may be stored in a storage apparatus and implemented by the computing apparatus. In addition, in some cases, the steps shown or described may be performed in an order different from that described herein, or may be made into individual integrated circuit modules, or a plurality of the modules or steps may be made into a single integrated circuit module. In this manner, the present disclosure is not limited to a combination of any specific hardware and software.

The above descriptions are merely preferred embodiments of the present disclosure and are not intended to limit the present disclosure. For a person skilled in the art, the present disclosure may have various modifications and variations. Any modifications, equivalent substitutions, improvements, and the like made within the principle of the present disclosure should be included within the protection scope of the present disclosure.

## Claims

1. A map display method, comprising:
determining a touch coordinate of a touch point of a touch action on a target map in a case that the touch action on the target map displayed on a touch display screen is detected;
determining a rectangular area centered on the touch coordinate according to the touch coordinate, a first preset length, and a second preset length, wherein the first preset length is a preset length of the rectangular area, and the second preset length is a preset height of the rectangular area; and
displaying an image included in the rectangular area in a target display area on the display screen.

2. The map display method according to claim 1, wherein the touch action is a tapping operation or a dragging operation.

3. The map display method according to claim 1, wherein before the displaying an image included in the rectangular area in a target display area on the display screen, the method comprises:
determining a coordinate of a first pixel point included in the rectangular area; and
determining the image included in the rectangular area according to the coordinate of the first pixel point, the first preset length, and the second preset length.

4. The map display method according to claim 3, wherein before the determining the image included in the rectangular area according to the coordinate of the first pixel point, a value of the first preset length, and a value of the second preset length, the method further comprises:
saving an image presently displayed on the touch display screen in a first view;
creating a first bitmap according to the length value and the height value of the first view; and
saving pixel information of the first view into the first bitmap; and
the determining the image included in the rectangular area according to the coordinate of the first pixel point, the first preset length, and the second preset length comprises: cropping the first bitmap according to the coordinate of the first pixel point, the first preset length, and the second preset length, to obtain the image included in the rectangular area.

5. The map display method according to claim 4, wherein the saving pixel information of the first view into the first bitmap comprises:
generating a canvas through the first bitmap; and
drawing image information in the first view into the first bitmap through the canvas.

6. The map display method according to claim 3, wherein the determining the image included in the rectangular area according to the coordinate of the first pixel point, the first preset length, and the second preset length comprises:
determining a second view according to the coordinate of the first pixel point, the first preset length, and the second preset length;
creating context information of a second bitmap through the second view, wherein a size of the second view is the same as an image size of the second bitmap; and
converting the context information of the second bitmap into the image included in the rectangular area.

7. The map display method according to claim 6, wherein before the converting the context information of the second bitmap into the image included in the rectangular area, the method further comprises:
obtaining image information of the second view; and
outputting the image information of the second view to the context information of the second bitmap.

8. The map display method according to claim 1, wherein the displaying an image included in the rectangular area in a target display area on the display screen comprises:
enlarging the image included in the rectangular area according to a first ratio and displaying an enlarged image in the target display area, or
reducing the image included in the rectangular area according to a second ratio and displaying a reduced image in the target display area.

9. A map display apparatus, comprising:
an obtaining module, configured to determine a touch coordinate of a touch point of a touch action on a target map in a case that the touch action on the target map displayed on a touch display screen is detected;
a determining module, configured to determine a rectangular area centered on the touch coordinate according to the touch coordinate, a first preset length, and a second preset length, wherein the first preset length is a preset length of the rectangular area, and the second preset length is a preset height of the rectangular area; and
a display module, configured to display an image included in the rectangular area in a target display area on the display screen.

10. A cleaning device, comprising the apparatus according to claim 9.

11. A storage medium, wherein a computer program is stored in the storage medium, and the program is run by a terminal device or a computer to perform the method according to any one of claims 1 to 8.

12. An electronic apparatus, comprising a memory and a processor, wherein a computer program is stored in the memory, and the processor is configured to run the computer program to perform the method according to any one of claims 1 to 8.
